# FASCICULE DE BREVET EUROPEEN

(11) **EP 2 732 735 B1**
(45) Date de publication et mention de la délivrance du brevet: **30.12.2015**
(21) Numéro de dépôt: 13192102.5
(22) Date de dépôt: 08.11.2013
(51) Int. Cl.: A47J 27/08

(54) **Appareil de cuisson d'aliments sous pression comportant des moyens de maintien en position d'un organe de commande**
Druckkochgerät, das Mittel zur Positionsbeibehaltung eines Steuerorgans umfasst
Appliance for cooking food under pressure comprising a means for holding a control member in position

(30) Priorité: 16.11.2012 FR 1260937
(43) Date de publication de la demande: 21.05.2014
(73) Titulaire: SEB S.A., 69130 Ecully (FR)
(72) Inventeur: Chameroy, Eric, 21260 Veronnes (FR); Rhetat, Eric, 21000 Dijon (FR)
(74) Mandataire: Martin, Didier Roland Valéry

(56) Documents cités:
- EP-A1- 1 029 483
- EP-A1- 2 204 112
- WO-A1-2009/098317
- DE-B3-102007 018 390

## Description

La présente invention se rapporte au domaine technique général des appareils de cuisson d'aliments sous pression, et en particulier aux appareils domestiques du genre autocuiseurs, comprenant une cuve et un couvercle destiné à être verrouillé sur la cuve par l'intermédiaire d'un organe de commande pour former une enceinte de cuisson sensiblement étanche pendant la cuisson, de tels appareils étant destinés à assurer la cuisson sous pression de vapeur des aliments contenus dans l'enceinte de cuisson.

La présente invention concerne plus particulièrement un appareil de cuisson d'aliments sous pression comprenant :
- une cuve et un couvercle susceptible de fermer la cuve de manière étanche pour former une enceinte de cuisson,
- un organe de commande du verrouillage/déverrouillage du couvercle sur la cuve destiné à être actionné manuellement par un utilisateur, ledit organe étant mobile selon une course s'étendant entre au moins une position de déverrouillage et une position de verrouillage, et étant en liaison cinématique avec un mécanisme de verrouillage monté mobile sur le couvercle pour déplacer ledit mécanisme de verrouillage et assurer le verrouillage/déverrouillage du couvercle,
- des moyens de maintien escamotables aptes à exercer un effort de maintien sur l'organe de commande lorsqu'il est dans sa position de déverrouillage.

Les appareils de cuisson d'aliments sous pression sont déjà connus et comprennent une cuve métallique sur laquelle est rapportée de manière étanche, par exemple par l'intermédiaire d'un joint, un couvercle, de manière à constituer une enceinte de cuisson sensiblement étanche.

Le couvercle est destiné à être verrouillé sur la cuve par l'intermédiaire d'un mécanisme de verrouillage lequel est sous la commande d'un organe de commande destiné à être actionné manuellement par un utilisateur de telle sorte que le mécanisme de verrouillage puisse occuper une position de verrouillage du couvercle sur la cuve et une position de déverrouillage dans laquelle le couvercle peut être ôté de la cuve.

Il existe différents types de mécanismes de verrouillage bien connus dans l'art antérieur, tels des mécanismes mettant en oeuvre une pluralité de mâchoires montées mobiles radialement sur le couvercle et qui viennent enserrer le bord de cuve en position de verrouillage.

On connaît également des mécanismes de verrouillage dit à *« segments »* formés par exemple par une ou plusieurs barres ou barrettes montées mobiles radialement sur le couvercle et venant s'engager dans des orifices ménagés dans la cuve pour assurer le verrouillage.

Il existe enfin d'autres mécanismes de verrouillage mettant par exemple en oeuvre un étrier mobile en rotation, sans que cette liste soit limitative.

La commande du déplacement du mécanisme de verrouillage entre sa position de verrouillage et sa position de déverrouillage est assurée par un organe de commande monté sur le couvercle et destiné à être actionné par l'utilisateur pour qu'il puisse commander le mécanisme de verrouillage. Grâce à cet organe de commande, l'utilisateur peut amener les pièces de verrouillage, du genre mâchoires ou segments par exemple, dans leur position de verrouillage et / ou de déverrouillage, par le biais d'un mécanisme de transmission interposé entre l'organe de commande et les pièces de verrouillage / déverrouillage.

Selon un dispositif connu, l'organe de commande est formé par un levier qui est monté mobile sur le couvercle et qui est susceptible d'occuper une position de verrouillage dans laquelle il adopte une position sensiblement rabattue sur le couvercle et une position de déverrouillage dans laquelle il adopte une position sensiblement verticale par rapport à la surface du couvercle. Pour faciliter le maintien de l'organe de commande en position verticale, un système de maintien est prévu. Le système comporte des doigts mobiles qui sont montés dans le couvercle et qui viennent engager, par l'intermédiaire de la poussée d'un ressort, l'organe de commande lorsqu'il occupe sa position verticale. L'engagement élastique des doigts mobiles permet de maintenir l'organe de commande dans une position sensiblement verticale. Lorsque l'utilisateur souhaite verrouiller le couvercle, il déplace l'organe de commande vers sa position de verrouillage ce qui a pour effet de repousser les doigts mobiles de telle sorte que l'organe de commande vient occuper sa position de verrouillage sensiblement parallèle au couvercle.

Un tel système donne globalement satisfaction puisqu'il existe un certain maintien de l'organe de commande en position verticale.

Toutefois, ce système n'est pas complètement satisfaisant dans la mesure où le maintien en position verticale de l'organe de commande est relativement instable alors que dans sa position de verrouillage, l'organe de commande est totalement libre de se déplacer.

Dans certaines conditions d'utilisation, et alors que l'appareil est verrouillé, l'organe de commande peut dès lors quitter sa position rabattue sur le couvercle et venir occuper une position saillante au-dessus du couvercle. Une telle situation n'est pas souhaitable.

Les objets assignés à l'invention visent par conséquent à porter remède aux différents inconvénients énumérés précédemment, et à proposer un nouvel appareil de cuisson d'aliments sous pression qui permet de maîtriser, et par exemple de stabiliser, les positions de l'organe de commande du verrouillage / déverrouillage du couvercle sur la cuve.

Un autre objet de l'invention vise à proposer un nouvel appareil de cuisson d'aliments sous pression dont la maîtrise des positions de l'organe de commande est obtenue à l'aide de moyens particulièrement fiables et robustes.

Un autre objet de l'invention vise à proposer un nouvel appareil de cuisson d'aliments sous pression permettant de maîtriser les positions de l'organe de commande du verrouillage / déverrouillage sur toute la course de déplacement de l'organe de commande.

Un autre objet de l'invention vise à proposer un nouvel appareil de cuisson d'aliments sous pression qui permet d'assurer efficacement le maintien de l'organe de commande dans sa position de verrouillage.

Un autre objet de l'invention vise à proposer un nouvel appareil de cuisson d'aliments sous pression qui permet de réduire les efforts à exercer sur l'organe de commande pour commander le verrouillage/déverrouillage du couvercle.

Un autre objet de l'invention vise à proposer un nouvel appareil de cuisson d'aliments sous pression qui permet de maintenir de manière stable, l'organe de commande en position de déverrouillage.

Les objets assignés à l'invention sont atteints à l'aide d'un appareil de cuisson d'aliments sous pression comprenant :
- une cuve et un couvercle susceptible de fermer la cuve de manière étanche pour former une enceinte de cuisson,
- un organe de commande du verrouillage/déverrouillage du couvercle sur la cuve destiné à être actionné manuellement par un utilisateur, ledit organe étant mobile selon une course s'étendant entre au moins une position de déverrouillage et une position de verrouillage, et étant en liaison cinématique avec un mécanisme de verrouillage monté mobile sur le couvercle pour déplacer ledit mécanisme de verrouillage et assurer le verrouillage/déverrouillage du couvercle,
- des moyens de maintien escamotable aptes à exercer un effort de maintien sur l'organe de commande lorsqu'il est dans sa position de déverrouillage, ledit appareil étant **caractérisé en ce que**
- les moyens de maintien sont aptes à exercer une force de rappel sur l'organe de commande lorsqu'il est en position de verrouillage de manière à maintenir ladite position de verrouillage.

D'autres particularités et avantages de l'invention apparaîtront et ressortiront plus en détails à la lecture de la description qui suit, en référence aux dessins annexés, donnés à titre purement illustratif et non limitatif, dans lesquels :
- La figure 1 illustre, selon une vue en perspective, un appareil de cuisson d'aliments conforme à l'invention en position de verrouillage et selon laquelle l'organe de commande est en position de verrouillage et rabattu sur le couvercle.
- La figure 2 illustre, selon une vue en perspective et en coupe latérale partielle, un détail de réalisation de l'invention montrant l'organe de commande en position de déverrouillage.
- La figure 3 illustre, selon une vue en perspective, un détail de réalisation de l'invention montrant les détails de réalisation d'une variante préférentielle d'un organe de commande conforme à l'invention.
- Les figures 4 à 7 illustrent, selon des vues en coupes partielles, des détails de réalisation de l'invention montrant l'organe de commande en position de verrouillage (figure 4), en position de début de déverrouillage (figure 5), en position de quasi-déverrouillage (figure 6) et en position de début de retour vers sa position de verrouillage (figure 7).
- La figure 8 illustre selon une vue en coupe partielle, un détail du profil du chemin de came conforme à l'invention.

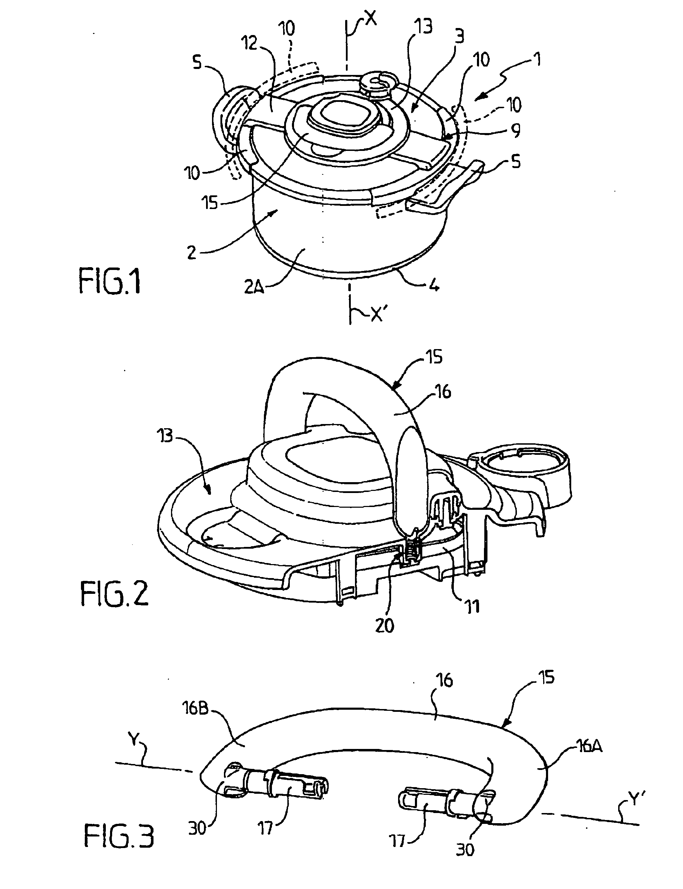

L'appareil 1 de cuisson d'aliments sous pression conforme à l'invention illustré aux figures (en particulier à la figure 1) est destiné à assurer la cuisson d'aliments de toutes natures, légumes, poissons ou viandes notamment, à un niveau de pression supérieur à la pression atmosphérique au sein d'une enceinte de cuisson sensiblement étanche formée par une cuve 2 et un couvercle 3 rapporté sur ladite cuve.

L'appareil 1 conforme à l'invention est généralement un appareil à usage domestique, tels qu'un autocuiseur, étant entendu que l'invention peut néanmoins s'appliquer sans sortir de son cadre, à des appareils de type professionnel ou semi-professionnel.

De manière connue, l'appareil 1 conforme à l'invention est avantageusement conçu pour monter en pression sous l'effet d'une source de chauffe embarquée ou externe et est de manière préférentielle un autocuiseur.

De manière également classique, la cuve 2 forme le récipient de cuisson et présente avantageusement une symétrie de révolution selon un axe X-X', cet axe se référant à la direction verticale de l'appareil lorsqu'il est en fonctionnement normal, c'est-à-dire repose sur un plan horizontal. La référence « *axiale* » ainsi définie sera utilisée dans la suite de la description par opposition à la direction « *radiale* », laquelle pourra être une direction radiale interne en direction de l'axe X-X' ou radiale externe en éloignement dudit axe.

La cuve 2 est fabriquée à partir d'un matériau métallique tel que de l'acier inoxydable et est pourvue d'un fond 4, bon conducteur de la chaleur et solidarisé à la cuve 2 par toutes techniques appropriées bien connues de l'homme du métier, et par exemple par frappe à chaud, les parois 2A de la cuve 2 s'élevant sensiblement verticalement à partir dudit fond 4.

Tel qu'illustré à la figure 1, la cuve 2 peut également comporter de manière avantageuse des organes de préhension 5, telles que des poignées, préférentiellement au nombre de deux et fixées par exemple par rivetage ou vissage, ou tous moyens appropriés, sur les parois 2A de la cuve 2, de préférence en position diamétralement opposée.

Le couvercle 3 de l'appareil 1 conforme à l'invention est de forme conjuguée à celle de la cuve 2 de manière à pouvoir être rapporté sur cette dernière pour fermer la cuve 2 de manière sensiblement étanche et former l'enceinte de cuisson.

De manière bien connue, le couvercle 3 est pourvu d'un joint annulaire (non représenté aux figures), par exemple en matériau élastomère, destiné à venir en appui contre le rebord supérieur de la cuve 2 de manière à réaliser une fermeture sensiblement étanche afin de permettre la montée en pression de l'appareil.

Tel qu'illustré aux figures 1 et 2, l'appareil 1 de cuisson est avantageusement un autocuiseur dont la cuve 2 est cylindrique et le couvercle 3, de forme générale discoïde, circulaire, étant entendu qu'au sens de l'invention, l'appareil 1 conforme à l'invention peut être de toute autre forme, en particulier ovale.

Tel qu'illustré aux figures, l'appareil 1 de cuisson d'aliments sous pression conforme à l'invention comporte également un mécanisme de verrouillage 9 monté mobile sur le couvercle 3 et destiné à assurer le verrouillage / déverrouillage du couvercle 3 sur la cuve 2.

Comme indiqué dans la partie introductive de la demande de brevet, les mécanismes de verrouillage sont bien connus de l'homme du métier et peuvent être de différents types.

Dans l'exemple illustré aux figures, le mécanisme de verrouillage 9 comprend à titre purement illustratif et non limitatif au moins une, et de préférence deux mâchoires de verrouillage 10 montées radialement mobiles sur le couvercle 3 entre une position de verrouillage (figure 1) et une position de déverrouillage (illustrée par un simple trait pointillé sur la figure 1) dans lesquelles les mâchoires 10 sont radialement écartées de la cuve 2 pour que le couvercle 3 puisse être ôté.

Tel qu'illustré, les mâchoires de verrouillage 10 se présentent classiquement sous la forme de segments en arc-de-cercle de section transversale en U de manière à pouvoir venir enserrer, dans leur position de verrouillage, le rebord supérieur de la cuve 2 pour réaliser le verrouillage.

Le mécanisme de verrouillage 9 comprend également des bras entraîneurs (non représentés) reliés par une extrémité à chaque mâchoire 10 et par l'autre extrémité, située vers le centre du couvercle 3, à un verrou 11 de commande monté également en translation sur le couvercle 3, de préférence selon une direction radiale et orthogonale à celle du déplacement des mâchoires 10. Tel qu'illustré, le verrou 11 peut être formé par une plaque. Tel qu'illustré également aux figures 1 et 2, la face supérieure du couvercle 3 peut être pourvue d'un habillage, par exemple à base de matériau plastique, comportant par exemple une traverse 12 et un disque central 13 permettant de recouvrir respectivement les bras entraîneurs ainsi que le verrou 11 et les pièces de la liaison cinématique associées.

L'appareil 1 de cuisson d'aliments sous pression comprend également un organe de commande 15 du verrouillage / déverrouillage du couvercle 3 sur la cuve 2 destiné à être actionné manuellement par un utilisateur, ledit organe 15 étant mobile selon une course s'étendant entre au moins une position de déverrouillage et une position de verrouillage (figures 1) et étant en liaison cinématique avec le mécanisme de verrouillage 9. Selon cette disposition, l'organe de commande 15 est monté mobile sur le couvercle 3 pour inter agir avec et sur le mécanisme de verrouillage 9 pour le déplacer et assurer le verrouillage / déverrouillage du couvercle 3.

Dans l'exemple préférentiel de réalisation illustré aux figures, l'organe de commande 15 est réalisé sous la forme d'un levier monté à rotation sur le couvercle 3 autour d'un axe de rotation Y-Y'. Avantageusement, l'organe de commande 15 est monté sensiblement dans la partie centrale du couvercle 3 et à rotation autour d'un axe Y-Y' sensiblement orthogonal à l'axe X-X' de révolution du couvercle 3 et de l'appareil 1. Selon la version préférentielle illustrée aux figures, l'organe de commande 15 est un levier constitué par une arche 16 avec une anse globalement de forme semi-circulaire constituant la partie de préhension laquelle se termine par deux demi-axes 17 servant d'axe de rotation Y-Y' et de liaison avec le couvercle 3.

De cette façon, l'organe de commande 15 est monté à rotation sur le couvercle 3 par l'intermédiaire de l'axe de rotation Y-Y' formé avantageusement de deux demi-axes 17.

Tel qu'illustré aux figures, le déplacement du mécanisme de verrouillage 9, en particulier des mâchoires 10, s'effectue par l'intermédiaire de l'organe de commande 15 dont le déplacement, en l'occurrence et de manière préférentielle la rotation, de sa position de verrouillage illustrée à la figure 1 vers sa position de déverrouillage, assure *in fine* le déplacement du verrou 11. Ce dernier assure, par le biais de la chaîne cinématique le reliant aux bras entraîneurs solidaires des mâchoires 10, le déplacement desdites mâchoires 10 en direction radiale externe pour venir occuper leur position de déverrouillage illustrée à la figure 2.

Dans l'exemple préférentiel illustré aux figures, l'organe de commande 15 occupe une position sensiblement horizontale (figure 1) en position de verrouillage et une position sensiblement verticale dans sa position de déverrouillage. En d'autres termes, l'organe de commande 15 occupe une position sensiblement orthogonale à la surface du couvercle 3 dans sa position de déverrouillage et une position sensiblement parallèle au plan général d'extension du couvercle dans position de verrouillage qui correspond à une position rabattue sur le disque 13 et donc non saillante (figure 1).

Selon l'invention, l'appareil de cuisson d'aliments sous pression comprend également des moyens de maintien 20 escamotables et aptes à exercer un effort de maintien sur l'organe de commande 15 lorsqu'il est dans sa position de déverrouillage.

Au sens de l'invention, les moyens de maintien 20 sont escamotables dans la mesure où la position de maintien peut disparaitre, les moyens de maintien 20 pouvant quitter leur position de maintien en s'effaçant simplement et de manière souple. L'organe de commande 15 peut ainsi quitter sa position de déverrouillage et être amené par l'utilisateur vers et jusqu'à sa position de verrouillage par simple action, et en l'occurrence rotation, sur ledit organe de commande, les moyens de maintien 20 s'effaçant automatiquement sans autre action positive particulière de la part de l'utilisateur.

Selon une caractéristique importante de l'invention, les moyens de maintien 20 sont aptes à exercer une force de rappel sur l'organe de commande 15 lorsque l'organe de commande 15 est en position de verrouillage de manière à maintenir ladite position de verrouillage.

Grâce à cette disposition, les moyens de maintien 20 conformes à l'invention maintiennent en permanence l'organe de commande 15 en position rabattue sur et contre le couvercle 3 et évite ainsi un soulèvement inopiné à la moindre sollicitation ou au moindre déplacement de l'appareil. La force de rappel peut être d'une valeur minime puisqu'elle doit simplement être de nature à s'opposer à tout déplacement inopiné de l'organe de commande sans pour autant bien évidemment générer un effort de rappel trop important qui serait de nature à empêcher le passage vers sa position de déverrouillage en exigeant un effort musculaire trop important.

Selon l'invention, et tel qu'illustré, les moyens de maintien 20 comprennent un doigt mobile 21 monté sur le couvercle en compression élastique contre l'organe de commande par l'intermédiaire d'une tête d'appui 22. Le doigt mobile 21 est monté dans un puits 20A ménagé à travers le disque 13 et comporte avantageusement un ressort 24, par exemple hélicoïdal, monté dans le puits 20A et sur lequel est enfilée la tête d'appui 22 qui vient recouvrir la partie supérieure du ressort 24.

Tel qu'illustré et avantageusement, la tête d'appui 22 est pourvue d'une zone de contact 26 destinée à contacter l'organe de commande 15 et qui est profilée et axialement déportée en considération de l'axe longitudinal de compression ZZ' défini par l'axe du puits 21A ou de symétrie du ressort 24. On obtient ainsi une action de compression du doigt mobile 21 qui est axialement décalée par rapport à l'axe ZZ'. Avantageusement, la zone de contact 26 est formée par une face d'attaque à deux pans inclinés relativement l'un à l'autre, 26A et 26B, et par une face d'appui 22A de telle sorte que la zone de contact 26 forme une sorte de « *biseau* ».

Bien évidemment au sens de l'invention, tout moyen technique équivalent à un ressort hélicoïdal peut être employé.

Tel qu'illustré aux figures, l'organe de commande 15 est pourvu d'un chemin de came 30 contre lequel vient en appui compressif la tête d'appui 22 lorsque l'organe de commande 15 est déplacé entre ses positions de verrouillage et déverrouillage, ledit chemin de came 30 étant conformé de sorte à pouvoir faire varier l'effort résultant de la compression du doigt mobile 21 sur l'organe de commande 15 au cours du déplacement de l'organe de commande 15 selon sa course.

Selon la variante préférentielle de l'invention illustrée aux figures, l'organe de commande 15 étant formé par un levier monté à rotation sur le couvercle 3 autour d'un axe de rotation Y-Y', le chemin de came 30 étant ménagé sur le levier autour de son axe de rotation Y-Y' de façon à pouvoir être engagé par le doigt mobile 21.

Tel qu'illustré à la figure 3 qui représente une variante préférentielle de l'invention, le levier est formé par une arche 16 constituée de deux bras 16A, 16B articulés par deux demi-axes 17 sur le couvercle 3, chaque bras étant pourvu à sa périphérie et vers les extrémités terminales desdits bras, de deux chemins de came 30, l'appareil étant alors pourvu de deux doigts mobiles 21 en appui compressif contre chaque bras 16A, 16B. Grâce à ce type de montage, les moyens de maintien 20 exercent constamment une force de rappel sur l'organe de commande 15 lorsqu'il est en position de verrouillage de telle sorte qu'il est constamment soumis à une force le maintenant dans sa position de verrouillage illustrée à la figure 1.

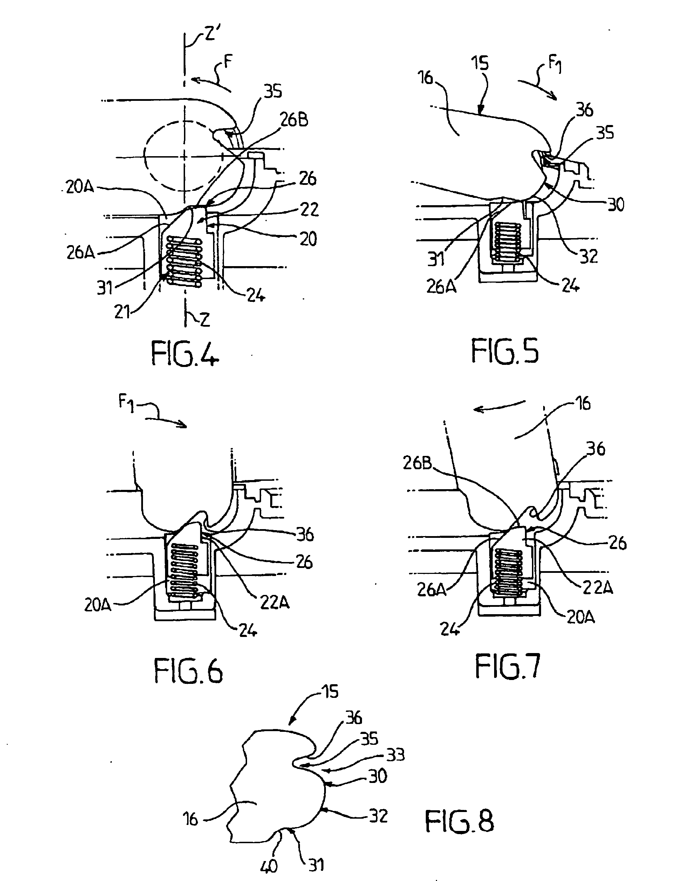

Selon une version particulièrement avantageuse de l'invention, le chemin de came 30 comporte un premier secteur 31 dit de verrouillage contre lequel vient en appui la tête d'appui 22 lorsque l'organe de commande 15 est en position de verrouillage, ledit premier secteur 31 et la tête d'appui 22 étant conformés pour que l'appui compressif du doigt mobile 21 sur le premier secteur 31 génère la force de rappel de l'organe de commande 15 vers sa position de verrouillage (figure 4).

Il est en effet possible de réaliser des conformations respectives du premier secteur 31 et de la tête d'appui 22 pour que la force générée par le ressort hélicoïdal 24 génère une force de rappel F (figure 4) qui tend à faire pivoter l'organe de commande 15 autour de son axe de rotation Y-Y' pour ramener constamment l'organe de commande 15 vers sa position de verrouillage.

De manière particulièrement avantageuse, le premier secteur 31 comporte un décrochement 40 ménagé dans le chemin de came 30, la tête d'appui 22 comportant une zone de contact 26 déportée par rapport à l'appui compressif du doigt mobile 21 de sorte à générer une force de rappel sur l'organe de commande 15. Avantageusement, le décrochement 40 a un profil à deux facettes conjugué aux deux pans 26A et 26B de la tête d'appui 22.

On voit en particulier sur la figure 4 que le décrochement 40 permet d'accommoder parfaitement la zone de contact 26, légèrement inclinée et déportée de telle sorte qu'une force de rappel F est générée puisque la force de compression générée par le ressort hélicoïdal 24 ne passe pas par l'axe Y-Y'.

Selon l'invention, et de manière indépendante ou non de ladite invention, le chemin de came 30 comprend un second secteur 32, dit de réduction d'effort qui est adjacent au premier secteur 31 et conformé pour réduire l'effort compressif du doigt mobile 21.

L'effort compressif généré par le ressort hélicoïdal 24 étant proportionnel à la compression du ressort, laquelle compression croît lorsque l'organe de commande 15 passe de sa position de verrouillage vers sa position de déverrouillage, il est possible de conformer le profil du second secteur 32 pour réduire relativement la croissance de l'effort de compression. De cette façon, l'utilisateur pourra exercer un effort minime sur l'organe de commande 15 pour passer de la position de verrouillage à la position de déverrouillage. Selon cette variante, seul le pan 26B supérieur est en appui compressif sur le second secteur 32 dont le profil fuyant tend à faire remonter sensiblement le doigt mobile ce qui réduit l'effort de compression.

Selon une autre caractéristique de l'invention, laquelle peut constituer également une invention en tant que telle, le chemin de came 30 comprend un troisième secteur 33, dit de blocage, qui est adjacent au second secteur 32 et conformé pour accueillir et bloquer le doigt mobile 21 en position de sorte à bloquer l'organe de commande 15 en position de déverrouillage.

Tel qu'illustré, le troisième secteur 33 comporte un logement 35 définissant une surface d'appui 36, le doigt mobile 21 étant pourvu d'une tête d'appui 22 de forme et de dimension complémentaire aux formes et dimensions du logement 35 de sorte à permettre à la tête d'appui 22 de venir s'introduire dans le logement 35 pour bloquer l'organe de commande 15 en position de déverrouillage par action sur la surface d'appui 36.Selon la variante préférentielle illustrée aux figures, les deux pans 26A et 26B et la face d'appui 22A sont de formes et dimensions adaptées et conjuguées à celles du logement 35 pour venir épouser parfaitement les faces internes du logement 35.

Les figures 6 et 7 illustrent bien la coopération de formes conduisant à l'engagement de la tête d'appui 22 en forme de biseau dont la face d'appui 22A vient prendre appui sur la surface d'appui 36 pour assurer le blocage, de préférence en position sensiblement verticale, de l'organe de commande 15.

Le fonctionnement du dispositif est le suivant.

En position de verrouillage, les doigts mobiles 21 sont axialement soumis à la compression des ressorts hélicoïdaux 24 et exercent un effort sur les chemins de came 30, en l'occurrence sur les secteurs de verrouillage 31. Le profil des secteurs de verrouillage 31, et en particulier des décrochements 40 et de la tête d'appui 22 permettent de créer une composante dont l'effort a tendance à rabattre l'organe de commande 15 ou l'arche 16, selon la flèche F (fig. 4).

Lorsque l'utilisateur souhaite déverrouiller l'appareil (figure 5) il actionne l'organe de commande 15 et le déplace selon la flèche F1 autour de l'axe Y-Y'. Le profil de dégagement du secteur de réduction d'effort 32 permet de générer un effort minimal de telle sorte que l'utilisateur peut facilement déplacer l'organe de commande 15 vers sa position de déverrouillage telle qu'illustrée à la figure 6 où l'organe de commande 15 est en position d'atteinte imminente de la position de déverrouillage.

Dans la position de déverrouillage, l'organe de commande 15 étant avantageusement sensiblement verticale, la tête d'appui 22 est entièrement insérée dans le logement 35, la forme en biseau venant épouser les formes, dimensions et contours dudit logement de telle sorte que la face d'appui 22A, laquelle est latérale, de la tête d'appui 22 vient directement en appui contre la surface d'appui 36 du logement 35 de telle sorte que l'organe de commande 15 est bloqué de manière stable dans sa position verticale de déverrouillage.

L'invention permet ainsi de maîtriser parfaitement les positions de l'organe de commande 15, en particulier de l'arche 16, à la fois dans sa position de verrouillage puisqu'une force constante de rappel la maintient dans cette position, et également dans sa position de déverrouillage, de préférence sensiblement verticale puisqu'elle est maintenue dans cette position grâce au profil particulier complémentaire du doigt mobile 21 et du troisième secteur 33 du chemin de came 30. Les efforts de manipulation qui doivent être effectués par l'utilisateur sur l'organe de commande 15 sont par ailleurs faibles en raison du profil spécifique des trois secteurs 31, 32, 33 composant le chemin de came 30.

## Revendications

1. Appareil (1) de cuisson d'aliments sous pression comprenant :
- une cuve (2) et un couvercle (3) susceptible de fermer la cuve (2) de manière étanche pour former une enceinte de cuisson,
- un organe de commande (15) du verrouillage/déverrouillage du couvercle (3) sur la cuve (2) destiné à être actionné manuellement par un utilisateur, ledit organe (15) étant mobile selon une course s'étendant entre au moins une position de déverrouillage et une position de verrouillage, et étant en liaison cinématique avec un mécanisme de verrouillage (9) monté mobile sur le couvercle (3) pour déplacer ledit mécanisme de verrouillage et assurer le verrouillage/déverrouillage du couvercle (3),
- des moyens de maintien (20) escamotables aptes à exercer un effort de maintien sur l'organe de commande (15) lorsqu'il est dans sa position de déverrouillage, ledit appareil (1) étant **caractérisé en ce que**
- les moyens de maintien (20) sont aptes à exercer une force de rappel sur l'organe de commande (15) lorsqu'il est en position de verrouillage de manière à maintenir ladite position de verrouillage.

2. Appareil (1) selon la revendication 1 **caractérisé en ce que** les moyens de maintien (20) comprennent un doigt mobile (21) monté sur le couvercle (3) en compression élastique contre l'organe de commande (15) par l'intermédiaire d'une tête d'appui (22).

3. Appareil (1) selon la revendication 2 précédente **caractérisé en ce que** l'organe de commande (15) est pourvu d'un chemin de came (30) contre lequel vient en appui compressif la tête d'appui (22) lorsque l'organe de commande (15) est déplacé entre ses positions de verrouillage et déverrouillage, ledit chemin de came (30) étant conformé de sorte à pouvoir faire varier l'effort résultant de la compression du doigt mobile (21) sur l'organe de commande (15) au cours du déplacement de l'organe de commande (15).

4. Appareil (1) selon la revendication 3 **caractérisé en ce que** le chemin de came (30) comporte un premier secteur (31) dit de verrouillage contre lequel vient en appui la tête d'appui (22) lorsque l'organe de commande (15) est en position de verrouillage, ledit premier secteur (31) et ta tête d'appui (22) étant conformés pour que l'appui compressif du doigt mobile (21) sur le premier secteur (31) génère la force de rappel de l'organe de commande (15) vers sa position de verrouillage.

5. Appareil (1) selon la revendication 4 **caractérisé en ce que** le premier secteur (31) comporte un décrochement ménagé dans le chemin de came (30), la tête d'appui (22) comportant une zone de contact (26) déportée par rapport à l'appui compressif du doigt mobile (21) de sorte à générer une force de rappel sur l'organe de commande (15).

6. Appareil (1) selon l'une des revendications 3 à 5 **caractérisé en ce que** le chemin de came (30) comprend un second secteur (32) dit de réduction d'effort qui est adjacent au premier secteur (31) et conformé pour réduire l'effort compressif du doigt mobile (21).

7. Appareil (1) selon l'une des revendications 3 à 6 **caractérisé en ce que** le chemin de came (30) comprend un troisième secteur (33) dit de blocage qui est adjacent au second secteur (32) et conformé pour accueillir et bloquer le doigt mobile (21) en position de sorte à bloquer l'organe de commande (15) en position de déverrouillage.

8. Appareil (1) selon la revendication 7 **caractérisé en ce que** le troisième secteur (33) comporte un logement (35) définissant une surface d'appui (36), le doigt mobile (21) étant pourvu d'une tête d'appui (22) de forme et dimensions complémentaires aux formes et dimensions du logement (35) de sorte à permettre à la tête d'appui (22) de venir s'introduire dans le logement (35) pour bloquer l'organe de commande (15) en position de déverrouillage par action sur la surface d'appui (36).

9. Appareil (1) selon l'une des revendications précédentes **caractérisé en ce que** le doigt mobile (21) est monté en compression élastique par l'intermédiaire d'un ressort (24).

10. Appareil (1) selon l'une des revendications précédentes **caractérisé en ce que** l'organe de commande (15) est formé par un levier monté à rotation sur le couvercle (3) autour d'un axe de rotation Y-Y', le chemin de came (30) étant ménagé sur le levier autour de l'axe de rotation Y-Y'.

11. Appareil (1) selon la revendication 10 **caractérisé en ce que** le levier est formé par une arche (16) constituée de deux bras (16A,16B) de leviers articulés par deux demi-axes (17) sur le couvercle (3), chaque bras (16A,16B) étant pourvu à sa périphérie de deux chemins de came (30), l'appareil étant pourvu de deux doigts mobiles (21) en appui compressif contre chaque bras (16A,16B).

12. Appareil (1) selon l'une des revendications précédentes **caractérisé en ce que** l'organe de commande (15) occupe une position sensiblement orthogonale à la surface du couvercle (3) dans sa position de déverrouillage et une position sensiblement parallèle au couvercle (3) dans sa position de verrouillage.

## Patentansprüche

1. Druckkochgerät (1) zum Zubereiten von Nahrungsmitteln, umfassend:
- einen Behälter (2) und einen Deckel (3), der den Behälter (2) dicht verschließen kann, um einen Kochbehälter zu bilden,
- ein Steuerorgan (15) zum Verriegeln/Entriegeln des Deckels (3) auf dem Behälter (2), das dazu bestimmt ist, von einem Benutzer manuell betätigt zu werden, wobei das Organ (15) entlang eines Hubwegs bewegbar ist, der sich zwischen mindestens einer Entriegelungsposition und einer Verriegelungsposition erstreckt, und in kinematischer Verbindung mit einem Verriegelungsmechanismus (9) steht, der beweglich auf dem Deckel (3) angebracht ist, um den Verriegelungsmechanismus zu verschieben und das Verriegeln/Entriegeln des Deckels (3) zu gewährleisten,
- einziehbare Haltemittel (20), die geeignet sind, eine Haltekraft auf das Steuerorgan (15) auszuüben, wenn es in seiner Entriegelungsposition ist, wobei die Vorrichtung (1) **dadurch gekennzeichnet ist, dass**
- die Haltemittel (20) geeignet sind, eine Rückstellkraft auf das Steuerorgan (15) auszuüben, wenn es in Verriegelungsposition ist, um die Verriegelungsposition beizubehalten.

2. Vorrichtung (1) nach Anspruch 1, **dadurch gekennzeichnet, dass** die Haltemittel (20) einen beweglichen Finger (21) aufweisen, der in elastischer Kompression gegen das Steuerorgan (15) über einen Stützkopf (22) auf dem Deckel (3) angebracht ist.

3. Vorrichtung (1) nach dem vorhergehenden Anspruch 2, **dadurch gekennzeichnet, dass** das Steuerorgan (15) mit einer Nockenbahn (30) ausgestattet ist, gegen die der Stützkopf (22) in Druckanlage kommt, wenn das Steuerorgan (15) zwischen seiner Verriegelungsposition und seiner Entriegelungsposition bewegt wird, wobei die Nockenbahn (30) ausgebildet ist, um die Kraft, die sich aus der Kompression des beweglichen Fingers (21) auf das Steuerorgan (15) während des Verschiebens des Steuerorgans (15) ergibt, variieren zu können.

4. Vorrichtung (1) nach dem vorhergehenden Anspruch 3, **dadurch gekennzeichnet, dass** die Nockenbahn (30) einen ersten Abschnitt (31) der Verriegelung aufweist, gegen den der Stützkopf (22) in Anlage kommt, wenn das Steuerorgan (15) in Verriegelungsposition ist, wobei der erste Abschnitt (31) und der Stützkopf (22) so geformt sind, dass die Druckanlage des beweglichen Fingers (21) auf den ersten Abschnitt (31) die Rückstellkraft des Steuerorgans (15) in Richtung seiner Verriegelungsposition erzeugt.

5. Vorrichtung (1) nach Anspruch 4, **dadurch gekennzeichnet, dass** der erste Abschnitt (31) einen Versatz aufweist, der in der Nockenbahn (30) ausgebildet ist, wobei der Stützkopf (22) einen Kontaktbereich (26) aufweist, der in Bezug auf die Druckanlage des beweglichen Fingers (21) versetzt ist, um eine Rückstellkraft auf das Steuerorgan (15) zu erzeugen.

6. Vorrichtung (1) nach einem der Ansprüche 3 bis 5, **dadurch gekennzeichnet, dass** die Nockenbahn (30) einen zweiten Bereich (32) der Kraftreduzierung aufweist, der benachbart zu dem ersten Bereich (31) ist und gestaltet ist, um die Druckkraft des beweglichen Fingers (21) zu reduzieren.

7. Vorrichtung (1) nach einem der Ansprüche 3 bis 6, **dadurch gekennzeichnet, dass** die Nockenbahn (30) einen dritten Bereich (33) der Blockierung aufweist, der benachbart zu dem zweiten Bereich (32) ist und gestaltet ist, um den beweglichen Finger (21) aufzunehmen und in einer Position zu blockieren, um das Steuerorgan (15) in Verriegelungsposition zu blockieren.

8. Vorrichtung (1) nach Anspruch 7, **dadurch gekennzeichnet, dass** der dritte Abschnitt (33) eine Aussparung (35) aufweist, die eine Auflagefläche (36) definiert, wobei der bewegliche Finger (21) mit einem Stützkopf (22) solcher Form und Abmessungen versehen ist, die komplementär zu den Formen und den Abmessungen der Aussparung (35) sind, um dem Stützkopf (22) zu ermöglichen, in die Aussparung (35) eingeführt zu werden, um das Steuerorgan (15) in Verriegelungsposition durch Einwirken auf die Auflagefläche (36) zu blockieren.

9. Vorrichtung (1) nach einem der vorhergehenden Ansprüche, **dadurch gekennzeichnet, dass** der bewegliche Finger (21) in elastischer Kompression mittels einer Feder (24) montiert ist.

10. Vorrichtung (1) nach einem der vorhergehenden Ansprüche, **dadurch gekennzeichnet, dass** das Steuerorgan (15) durch einen Hebel gebildet ist, der auf dem Deckel (3) drehbar um eine Drehachse Y-Y' angebracht ist, wobei die Nockenbahn (30) auf dem Hebel um die Drehachse Y-Y' angeordnet ist.

11. Vorrichtung (1) nach Anspruch 10, **dadurch gekennzeichnet, dass** der Hebel durch einen Bogen (16) gebildet ist, der aus zwei Hebelarmen (16A, 16B) besteht, die durch zwei Halbachsen (17) auf dem Deckel (3) angelenkt sind, wobei jeder Arm (16A, 16B) an seinem Rand mit zwei Nockenbahnen (30) versehen ist, wobei die Vorrichtung mit zwei beweglichen Fingern (21) in Druckanlage gegen jeden Arm (16A, 16B) versehen ist.

12. Vorrichtung (1) nach einem der vorhergehenden Ansprüche, **dadurch gekennzeichnet, dass** das Steuerorgan (15) in seiner Entriegelungsposition eine Position, die im Wesentlichen orthogonal zu der Fläche des Deckels (3) ist, und in seiner Verriegelungsposition eine Position einnimmt, die im Wesentlichen parallel zu dem Deckel (3) ist.

## Claims

1. A food pressure-cooking appliance (1) comprising :
- a bowl (2) and a lid (3) adapted to tightly close the bowl (2) to form a cooking chamber,
- a member (15) for controlling the locking / unlocking of the lid (3) on the bowl (2), intended to be manually operated by a user, said member (15) being movable along a stroke extending between at least one unlocking position and one locking position, and being kinematically linked to a locking mechanism (9) mounted movable on the lid (3) to displace said locking mechanism and to ensure the locking / unlocking of the lid (3),
- retractable holding means (20) adapted to exert a holding effort on the control member (15) when the latter is in its unlocking position, said appliance (1) being **characterized in that**
- the holding means (20) are adapted to exert a return force on the control member (15) when the latter is in the locking position, so as to hold said locking position.

2. The appliance (1) according to claim 1, **characterized in that** the holding means (20) comprise a movable finger (21) mounted on the lid (3) in elastic compression against the control member (15) through a bearing head (22).

3. The appliance (1) according to previous claim 2, **characterized in that** the control member (15) is provided with a cam race (30) against which the bearing head (22) comes in compressive bearing when the control member (15) is displaced between its locking and unlocking positions, said cam race (30) being shaped so that the effort resulting from the compression of the movable finger (21) on the control member (15) can be varied during the displacement of the control member (15).

4. The appliance (1) according to claim 3, **characterized in that** the cam race (30) includes a first sector (31), referred to as locking sector, against which the bearing head (22) comes to bear when the control member (15) is in the locking position, said first sector (31) and the bearing head (22) being shaped in such a manner that the compressive bearing of the movable finger (21) on the first sector (31) generates the return force of the control member (15) toward its locking position.

5. The appliance (1) according to claim 4, **characterized in that** the first sector (31) includes a recess arranged in the cam race (30), the bearing head (22) including a contact area (26) offset with respect to the compressive bearing of the movable finger (21), so as to generate a return force on the control member (15).

6. The appliance (1) according to one of claims 3 to 5, **characterized in that** the cam race (30) comprises a second sector (32), referred to as effort reduction sector, which is adjacent to the first sector (31) and shaped so as to reduce the compressive effort of the movable finger (21).

7. The appliance (1) according to one of claims 3 to 6, **characterized in that** the cam race (30) comprises a third sector (33), referred to as blocking sector, which is adjacent to the second sector (32) and shaped so as to receive and block the movable finger (21) in position in such a manner to block the control member (15) in the unlocking position.

8. The appliance (1) according to claim 7, **characterized in that** the third sector (33) includes an accommodation (35) defining a bearing surface (36), the movable finger (21) being provided with a bearing head (22) whose shape and size are complementary of the shape and size of the accommodation (35) so as to allow the bearing head (22) entering into the accommodation (35) to block the control member (15) in the unlocking position by action on the bearing surface (36).

9. The appliance (1) according to one of the preceding claims, **characterized in that** the movable finger (21) is mounted in elastic compression through a spring (24).

10. The appliance (1) according to one of the preceding claims, **characterized in that** the control member (15) is formed by a lever mounted for rotation on the lid (3) about an axis of rotation Y-Y', the cam race (30) being arranged on the lever about the axis of rotation Y-Y'.

11. The appliance (1) according to claim 10, **characterized in that** the lever is formed by an arch (16) consisted of two lever arms (16A, 16B) articulated by two half-axes (17) on the lid (3,) each arm (16A, 16B) being provided at its periphery with two cam races (30), the appliance being provided with two movable fingers (21) in compressive bearing against each arm (16A, 16B).

12. The appliance (1) according to one of the preceding claims, **characterized in that** the control member (15) is in a position substantially orthogonal to the surface of the lid (3) in its unlocking position and in a position substantially parallel to the lid (3) in its locking position.
